## Europäisches Patentamt

## European Patent Office

## Office européen des brevets

(11) Veröffentlichungsnummer: **0 295 533 B1**

(12) **EUROPÄISCHE PATENTSCHRIFT**

(45) Veröffentlichungstag der Patentschrift: **19.11.92**

(21) Anmeldenummer: **88109034.4**

(22) Anmeldetag: **07.06.88**

(51) Int. Cl.⁵: **H04M 19/00**, H04M 19/02, H04M 15/00

(54) **Teilnehmeranschlussschaltung.**

(30) Priorität: **13.06.87 DE 3719791**

(43) Veröffentlichungstag der Anmeldung:
**21.12.88 Patentblatt 88/51**

(45) Bekanntmachung des Hinweises auf die
Patenterteilung:
**19.11.92 Patentblatt 92/47**

(84) Benannte Vertragsstaaten:
**BE CH DE ES FR IT LI NL**

(56) Entgegenhaltungen:
**EP-A- 0 158 290**
**EP-A- 0 209 716**

(73) Patentinhaber: **Alcatel SEL Aktiengesellschaft
Lorenzstrasse 10
W-7000 Stuttgart 40(DE)**

(84) Benannte Vertragsstaaten:
**BE CH DE FR IT LI NL**

(73) Patentinhaber: **ALCATEL N.V.
Strawinskylaan 537 (World Trade Center)
NL-1077 XX Amsterdam(NL)**

(84) Benannte Vertragsstaaten:
**ES**

(72) Erfinder: **Dreier, Benno
Christian-Wagner-Strasse 10
W-7015 Korntal-Münchingen(DE)**

(74) Vertreter: **Brose, Gerhard et al
Alcatel SEL AG Patent- und Lizenzwesen
Postfach 30 09 29
W-7000 Stuttgart 30(DE)**

Rank Xerox (UK) Business Services

## Beschreibung

Die Erfindung betrifft eine Teilnehmeranschlußschaltung nach dem Oberbegriff des Hauptanspruchs.

Eine solche Schaltung ist aus der EP 0 158 290 A2 bekannt. Diese Schaltung wird verwendet, um nach dem Sperrwandlerprinzip einen über eine Teilnehmerleitung angeschlossenen Teilnehmerapparat sowohl fernzuspeisen als auch mit den erforderlichen Signalwechselspannungen zu beaufschlagen. Die Soll-Ausgangsspannung dieses direkt auf die Teilnehmerleitung arbeitenden Sperrwandlers ist also eine Gleichspannung mit überlagerter Signalwechselspannung. Ein dazu proportionales Signal wird als Steuersignal einem Eingang des Sperrwandlers zugeführt. Der Sperrwandler ist eine mögliche Ausführungsform eines Gleichspannungswandlers. Die Sperrwandlerfrequenz liegt bei 512 kHz. Die Spannung am Kondensator soll einerseits der Signalwechselspannung genau folgen, andererseits soll die Sperrwandlerfrequenz unterdrückt werden. Bei zu großem Kapazitätswert wird der Kondensator durch den angeschlossenen Teilnehmerapparat nicht schnell genug entladen, um bei höheren Frequenzen noch folgen zu können; bei zu kleinem Kapazitätswert wird die Sperrwandlerfrequenz nicht ausreichend unterdrückt.

Beim Stand der Technik nach der EP 0 158 290 A2 ist deshalb parallel zum Kondensator ein steuerbarer Widerstand vorgesehen, mit dem der Kondensator gezielt entladen werden kann. Solange die Wechselspannungen klein und deren Frequenzen niedrig sind, ist dieses Konzept durchaus anwendbar.

Verschiedene Postverwaltungen arbeiten aber mit Teilnehmeranschlußschaltungen, die an die Teilnehmerleitungen nicht nur Speise-Gleichspannungen und Sprach-Signalwechselspannungen anzulegen in der Lage sind, sondern auch noch Gebührenimpulse. Deren Spannungen sind hoch im Vergleich zu den Sprachwechselspannungen (z.B. etwa 5V gegenüber etwa 1V) und deren Frequenzen sind hoch gegenüber der höchsten Sprachfrequenz (12 oder 16 kHz gegenüber 3,4 kHz). Aufgrund interner Überlegungen sollen auch die Gebührenimpulse vom Sperrwandler mit erzeugt werden. Dazu muß ein entsprechendes Signal dem Steuersignal am Eingang des Sperrwandlers überlagert werden. Versuche haben gezeigt, daß dies hohe Verlustleistungen im steuerbaren Widerstand bedingt, die über den Sperrwandler mit weiteren Verlusten ausgeglichen werden müssen. Wesentliche Teile der Teilnehmeranschlußschaltung müssen deshalb ausschließlich im Hinblick auf die nur selten und kurzzeitig auftretenden Gebührenimpulse dimensioniert werden.

Von anderen Teilnehmeranschlußschaltungen ist es bekannt, z.B. aus der EP 0 209 716 A2 oder aus der EP 0 206 279 A1, die Gebührenimpulse separat aufzuarbeiten und, über Filter getrennt, einzuspeisen. Diese Art der Beaufschlagung der Teilnehmerleitung mit Gebührenimpulsen ist selbstverständlich auch anwendbar, wenn die übrigen Spannungen mit einem Sperrwandler erzeugt werden.

Sowohl die Überdimensionierung im einen Fall als auch die im anderen Fall zusätzlich für die separate Aufarbeitung der Gebührenimpulse erforderlichen Teile stellen einen erheblichen Mehraufwand dar, wenn auf eine Teilnehmerleitung auch Gebührenimpulse eingespeist werden sollen.

Hier schafft die Erfindung Abhilfe durch eine nach der Lehre des Hauptanspruchs ausgestaltete Teilnehmeranschlußschaltung. Demnach wird zur Einspeisung von Gebührenimpulsen der vorhandene Gleichspannungswandler mit verwendet und bei der Frequenz der Gebührenimpulse die effektive Kapazität des Glättungskondensators verringert.

Vorzugsweise erfolgt dies dadurch, daß in Reihe zum Kondensator ein Parallelresonanzkreis liegt. Dieser stellt bei einer oder auch bei beiden der in Betracht kommenden Frequenzen im wesentlichen einen Wirkwiderstand dar, der dann den Lade- und Entladestrom des Kondensators und damit dessen bei dieser Frequenz wirksame Kapazität beeinflußt.

Bevorzugt wird also bei einer nach dem Sperrwandlerprinzip arbeitenden Teilnehmeranschlußschaltung dem Glättungskondensator ein Parallelresonanzkreis nachgeschaltet, der verhindert, daß Gebührenimpulse mit 12 oder 16 kHz durch den Glättungskondensator nahezu kurzgeschlossen werden.

Im folgenden wird die Erfindung anhand eines Ausführungsbeispiels unter Zuhilfenahme der beiliegenden Zeichnung weiter erläutert.

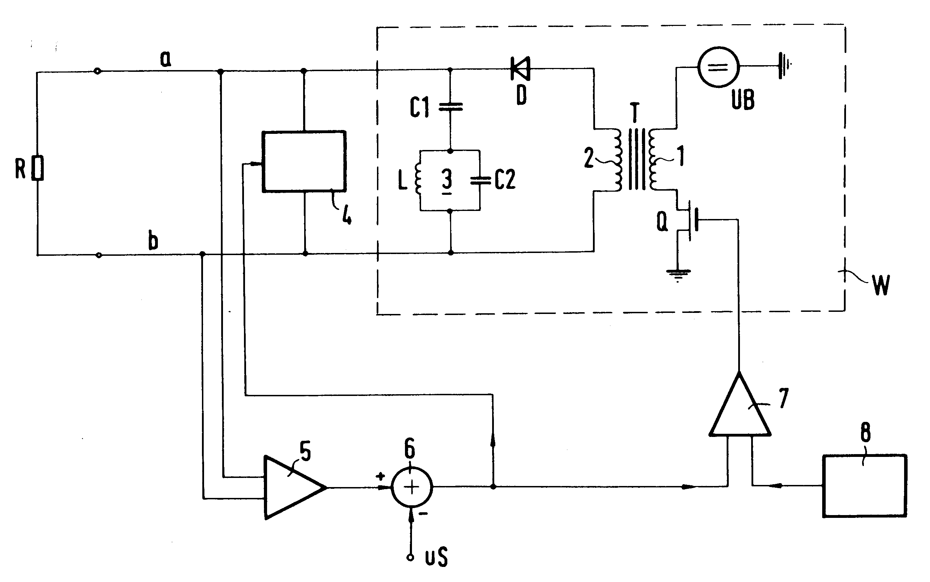

Die Zeichnung zeigt eine erfindungsgemäße Teilnehmeranschlußschaltung als Weiterentwicklung der in Figur 4 der EP 0158290 A2 gezeigten Schaltung.

Ein Widerstand R steht in der Zeichnung stellvertretend für eine Teilnehmerleitung und einen daran angeschlossenen Teilnehmerapparat. Dieser Widerstand wird durch einen Sperrwandler W gespeist. Mittels eines Verstärkers 5 wird das Signal am Ausgang des Sperrwandlers W gemessen. Die Zeichnung zeigt eine Beschaltung, bei der die Potentiale auf den beiden Adern a und b der Teilnehmerleitung abgegriffen und somit am Ausgang des Verstärkers 5 ein der Spannung proportionales Signal abgegeben wird. Selbstverständlich ist auch bei Bedarf eine Beschaltung möglich, bei der das Ausgangssignal des Verstärkers 5 dem Strom auf der Teilnehmerleitung proportional ist. Vom Ausgangssignal des Verstärkers 5 wird in einem Summierer 6 ein Sollsignal uS subtrahiert. Das Ausgangssignal des Summierers 6 wird als Regelsignal einem Eingang eines Komparators 7 zugeführt. Das Ausgangssignal eines Sägezahngenerators 8 wird dem andern Eingang des Komparators 7 zugeführt. Der Sägezahngenerator arbeitet mit 500kHz. Das Ausgangssignal des Komparators 7 ist ein pulsbreitenmoduliertes Signal, durch das der Sperrwandler W angesteuert wird.

Der Sperrwandler W enthält einen Übertrager T mit einer vermittlungsseitigen Wicklung 1 und einer teilnehmerseitigen Wicklung 2. Die vermittlungsseitige Wicklung 1 bildet zusammen mit einem Schalter Q und einer Gleichspannungsquelle UB einen Stromkreis, durch den Energie in den Übertrager T gebracht werden kann. Der Schalter Q ist als MOS-Feldeffekttransistor gezeichnet, der direkt vom Komparator 7 angesteuert ist. Die teilnehmerseitige Wicklung 2 bildet zusammen mit einer Diode D, einem Kondensator C1 und einem Parallelresonanzkreis 3 einen Stromkreis, der dem Übertrager T die Energie wieder entnimmt. Der Parallelresonanzkreis 3 besteht aus einer Spule L und einem Kondensator C2. Er ist auf diejenige Frequenz abgestimmt, mit der die Gebührenimpulse eingespeist werden, d.h. auf 12 oder 16 kHz.

Als Glättungskondensator für die Schaltfrequenz des Sperrwandlers W (500 KHz), wirkt die Reihenschaltung der Kondensatoren C1 und C2. Vorteilhafterweise werden deshalb diese Kondensatoren untereinander ungefähr gleich groß und jeweils etwa doppelt so groß wie bei alleiniger Verwendung des Kondensators C1 gewählt. Bevorzugte Werke für Gebührenimpulse mit 16 kHz sind $C1 = C2 = 330nF, L = 300\mu H$, oder $C1 = 470nF$, $C2 = 220nF$, $L = 450\mu H$.

Für Gebührenimpulse, im Beispiel bei 16kHz, weist der Parallelresonanzkreis 3 einen Widerstand von mehr als 1kΩ auf. Ohne Parallelresonanzkreis ergäbe sich bei dieser Frequenz eine Last von nur etwa 66Ω. Der Kondensator C1 ist damit für diese Frequenz kaum wirksam, sodaß schon mit kleinen Strömen die erforderlichen Spannungen erreicht werden.

Bei Sprachfrequenzen bis 3,4 kHz wirkt sich der Parallelresonanzkreis 3 praktisch nicht aus. Die Reihenschaltung aus Widerstand R und Kondensator C1 bestimmt, mit welcher Entladezeitkonstante der Kondensator C1 entladen werden kann. Bei ungünstigen Leitungslängen ist diese Zeitkonstante so groß, daß sich selbst bei abgeschaltetem Sperrwandler W der Kondensator C1 nicht schnell genug entlädt, um höherfrequenten Signalanteilen zu folgen. Für diesen Fall ist, wie schon beim Stand der Technik, am Ausgang des Sperrwandlers W ein Entladestromkreis 4 vorhanden. Damit kann der Kondensator C1 beliebig schnell entladen werden und somit auch höherfrequenten Signalen folgen. Der Entladestromkreis 4 enthält einen Transistor, der als steuerbarer Widerstand wirkt. Das Ansteuersignal wird abgeleitet vom Ausgangssignal des Summierers 6. Das Ausgangssignal des Summierers 6 veranlaßt damit entweder über den Komparator 7 ein Nachladen des Kondensators C1 oder über den Entladestromkreis 4 dessen Entladen, je nach Signalverlauf. Der Entladestromkreis 4 wirkt wie die in der EP 0158290 A2 als "slew rate enhancer" und "level shifter" bezeichneten Baugruppen und kann auch wie diese aufgebaut sein.

An die Stelle des Parallelresonanzkreises 3 könnte auch ein durch einen Schalter überbrückter Widerstand oder Kondensator treten, wobei der Schalter dann beim Senden eines Gebührenimpulses zu öffnen wäre. Ein Ansteuerungssignal für den Schalter könnte, wie auch das Sollsignal uS, von außen kommen oder durch einen auf den Gebührenimpuls ansprechenden Detektor erzeugt werden.

Der zusätzliche Aufwand, selbst die zusätzlich erforderliche Spule, ist dadurch gerechtfertigt, daß der Übertrager T, die Diode D, der als Schalter Q wirkende MOS-Feldeffekttransistor und der Entladestromkreis 4 für deutlich geringere Ströme und Leistungen ausgelegt werden können, was wiederum im gleichen Maße verringerte Schaltstörspannung und -strahlung zur Folge hat.

**Patentansprüche**

1. Teilnehmeranschlußschaltung mit einem Gleichspannungswandler mit Glättungskondensator, bei der der Gleichspannungswandler eine angeschlossene Teilnehmerleitung sowohl mit der erforderlichen Fernspeise-Gleichspannung als auch mit einer dieser überlagerten Signalwechselspannung beaufschlagt, **dadurch gekennzeichnet**, daß, um die Teilnehmerleitung (a, b) über den Gleichspannungswandler (W) zusätzlich mit Gebührenimpulsen beaufschlagen zu können, deren Frequenz (12 kHz, 16 kHz) deutlich höher als die der Signalwechselspannung ist, eine Einrichtung (3) vorhanden ist, durch die für die Gebührenimpulse die Wirkung des Glättungskondensators (C1) verringert wird.

2. Teilnehmeranschlußschaltung nach Anspruch 1, dadurch gekennzeichnet, daß die Einrichtung ein in Reihe zum Glättungskondensator (C1) liegender Parallelresonanzkreis (L, C2) ist.

**Claims**

1. A line circuit comprising a DC/DC converter with a smoothing capacitor, said smoothing capacitor applying to a subscriber line connected thereto both the necessary DC power-supply voltage and an AC signal voltage superimposed on said DC power-supply voltage, **characterized in** that, to be able to additionally apply metering pulses through the DC/DC converter (W) to the subscriber line (a, b) which have a frequency (12 kHz, 16 kHz) substantially higher than that of the AC signal voltage, a device (3) is provided which reduces the effect of the smoothing capacitor (C1) on the metering pulses.

2. A line circuit as claimed in claim 1, characterized in that the device is a parallel-resonant circuit (L, C2) in series with the smoothing capacitor (C1).

**Revendications**

1. Circuit de connexion ou joncteur d'abonné comportant un convertisseur continu-continu avec un condensateur de lissage, dans lequel le convertisseur continu-continu alimente une ligne d'abonné qui y est raccordée avec la tension continue d'alimentation à distance nécessaire, ainsi qu'avec une tension alternative de signal ou de parole superposée, caractérisé en ce qu'afin de opuvoir appliquer, en plus, des impulsions de taxation, dont la fréquence (12 kHz, 16 kHz) est sensiblement plus élevée que la tension alternative de signal ou de parole, à la ligne d'abonné (a, b) au moyen du convertisseur continu-continu (W), est présent un dispositif (3) au moyen duquel l'effet du condensateur de lissage (C1) est réduit pour les impulsions de taxation.

2. Circuit de connexion d'abonné selon la revendication 1, caractérisé en ce que le dispositif comprend un circuit de résonance parallèle (L, C2) disposé en série avec le condensateur de lissage (C1).